# EUROPÄISCHE PATENTSCHRIFT

(11) **EP 0 848 181 B1**
(45) Veröffentlichungstag und Bekanntmachung des Hinweises auf die Patenterteilung: **27.03.2002**
(21) Anmeldenummer: 96120041.7
(22) Anmeldetag: 13.12.1996
(51) Int. Cl.: F16D 65/04

(54) **Teilbelagscheibenbremse und Bremsbacke**
Caliper disc brake and brake pad
Frein à disque à garniture partielle et plaquette de frein

(43) Veröffentlichungstag der Anmeldung: 17.06.1998
(73) Patentinhaber: TMD Friction GmbH, 51381 Leverkusen (DE)
(72) Erfinder: Röhling, Willmut, 50670 Köln (DE)
(74) Vertreter: Dallmeyer, Georg, Dipl.-Ing.

(56) Entgegenhaltungen:
- EP-A- 0 169 998
- DE-U- 8 507 640
- FR-A- 2 734 875
- PATENT ABSTRACTS OF JAPAN vol. 003, no. 065 (M-061), 6.Juni 1979 & JP 54 042569 A (TOYOTA MOTOR CORP), 4.April 1979,
- PATENT ABSTRACTS OF JAPAN vol. 014, no. 347 (M-1002), 26.Juli 1990 & JP 02 120534 A (MAZDA MOTOR CORP), 8.Mai 1990,

## Beschreibung

Die Erfindung betrifft eine Teilbelagscheibenbremse bzw. eine Bremsbacke nach dem Oberbegriff des Anspruchs 1 bzw. 2.

Teilbelagscheibenbremsen werden nunmehr verstärkt auch im Lastkraftwagenbau eingesetzt. Aufgrund des hohen Gewichts der Lastkraftwagen sind derartige Bremsen und Bremsbacken extrem hohen Belastungen ausgesetzt, da die Bremsleistung um ein Vielfaches höher ist als die Bremsleistung bei üblichen Personenkraftwagen.

Bei Scheibenbremssystemen in Lastkraftwagen treten häufig Risse in der Bremsscheibe auf, die vermutlich auf die schockartige Hitzeeinleitung bei einem Bremsvorgang aus hohen Geschwindigkeiten zurückzuführen sind. Am Außenumfang der Bremsscheibe entstehen aufgrund der höheren Umfangsgeschwindigkeit höhere Temperaturen, damit verbunden auch unterschiedliche Ausdehnungen des Bremsscheibenmaterials. An der radial inneren Seite der Bremsscheibe ist diese mit dem Bremstopf verbunden, so daß dort eine bessere Wärmeableitung erfolgt. Die unterschiedlichen Aus dehnungen in verschiedenen Zonen der Bremsscheibe führen dazu, daß sich die Bremsscheiben beispielsweise schirmförmig oder in Tangentialrichtung wellenförmig verzieht, wodurch die Hitzeeinleitung beim Bremsvorgang noch inhomogener wird. Im Extremfall kommt es zu sich radial erstreckenden Rissen. Wenn diese von außen nach innen durchgehend sind, muß die Bremsscheibe ausgetauscht werden.

Aus der EP-A-0 169 998 ist eine Bremsbacke bzw. eine Teilbelagscheibenbremse bekannt, bei der gemäß den Ausführungsbeispielen der Fign. 9 und 10 die tangentiale Länge des Reibbelages in Radialrichtung nach außen kontinuierlich abnimmt. Zweck dieser geometrischen Gestaltung des Reibbelages ist die Vermeidung oder Reduzierung von Bremsgeräuschen. Die Entgegenhaltung befasst sich nicht mit dem Problem der Überlastung von Scheibenbremssystemen in Lastkraftwagen und der Rissbildung in den Bremsscheiben.

Der Erfindung liegt die Aufgabe zugrunde, eine Teilbelagscheibenbremse bzw. eine Bremsbacke zu schaffen, mit der Rissbildungen in der Bremsscheibe auch bei hohen thermischen Belastungen der Bremse vermieden werden können.

Zur Lösung dieser Aufgabe dienen erfindungsgemäß die Merkmale des neuen Anspruchs 1 bzw. 2.

Die Erfindung sieht in vorteilhafter Weise vor, dass zum Ausgleich der radial unterschiedlichen Wärmeverteilung in der Bremsscheibe zwischen Reibbelag und Belagträgerplatte eine keilförmige Zwischenschicht angeordnet ist, die in Radialrichtung nach außen in der Dicke zunimmt und deren Kompressibilität höher ist als die des Reibbelages, wodurch eine der Wärmeverteilung entgegengesetzte radiale Profilierung der über den Bremsbelag eingebrachten Reibleistung erzielbar ist.

Die Erfindung ermöglicht es in vorteilhafter Weise die radiale Wärmeverteilung in der Bremsscheibe zu vergleichmäßigen und insbesondere die Bildung von in Radialrichtung unterschiedlich warmen Zonen auf der Bremsscheibe zu verhindern. Die Vergleichmäßigung der Temperatur bzw. des Temperaturgradienten in Radialrichtung verringert die Rissgefahr. Insbesondere werden in Radialrichtung durchgängige Risse verhindert, die einen Austausch der Bremsscheibe erforderlich machen. Die im Querschnitt keilförmige Zwischenschicht ermöglicht es in vorteilhafter Weise die Reibleistung in den Außenbereichen zu reduzieren, indem der Anpressdruck nach außen zunehmend abnimmt.

Bei einer solchen keilförmigen Zwischenschicht kann der Reibbelag entsprechend entgegengesetzt keilförmig gestaltet sein, so daß die Reibfläche parallel zur Belagträgerplatte verläuft.

Während bei bekannten Reibbelägen die Reibbelagfläche in etwa eine Kreisringsegmentform aufweist, sieht die Erfindung in Bereichen, in denen es zu einer örtlichen Überhitzung der Bremsscheibe kommt, vor, die Fläche des Reibbelages zu verringern, um dadurch die Reibleistung und damit entsprechend die Wärmeeinleitung in dem entsprechenden radialen Abschnitt der Bremsscheibe zu verringern.

Alternativ oder ergänzend kann auch die Zusammensetzung des Reibbelagmaterials in Radialrichtung variieren, um die in Radialrichtung spezifische Reibleistung zu beeinflussen.

Bei einem bevorzugten Ausführungsbeispiel ist vorgesehen, daß die tangentiale Länge des Reibbelages in Radialrichtung nach außen kontinuierlich abnimmt. Bei einem solchen Reibbelag wird die spezifische Reibleistung auf der radial inneren Seite erhöht, da dort aufgrund des angeformten Bremstopfes eine bessere Wärmeableitung erfolgt. Desweiteren kann an dieser Stelle eine höhere Reibfläche vorgesehen werden, weil der Kraftangriffsradius für das Bremsmoment geringer ist. In dem mittleren Bereich der Bremsscheibe wird bei etwas verringerter tangentialer Länge des Reibbelages aufgrund des längeren Kraftangriffshebels eine höhere Reibleistung eingebracht, die eine kühlere Ringzone auf der Bremsscheibe auf eine höhere Temperatur bringen soll. Schließlich ist in dem Außenbereich der Bremsscheibe die Reibbelagfläche erheblich reduziert, um die Reibleistung zu verringern und damit die Bildung eines überhitzten äußeren Wärmegürtels auf der Bremsscheibe zu verhindern.

Der Reibbelag kann in dem radial äußeren Bereich zur Verringerung der Reibleistung eine Aussparung aufweisen. Die Aussparung kann unterschiedliche Formen aufweisen und sich ggf. auch radial verjüngend bis zur radial inneren Kante des Reibbelages erstrecken.

Der Reibbelag kann eine im wesentlichen trapezartige Form aufweisen, deren breitere Basisseite radial innen angeordnet ist.

Die Zusammensetzung des Reibelagmaterials kann in Radialrichtung derart verändert sein, daß der Reibwert des Reibbelages von radialinnen nach außen abnimmt. Über den unterschiedlichen Reibwert läßt sich auch die in die Bremsscheibe eingebrachte Reibleistung beeinflussen.

Das Reibbelagmaterial kann in Radialrichtung auch eine unterschiedliche Kompressibilität aufweisen. Beispielsweise kann vorgesehen sein, daß das Reibbelagmaterial radial nach außen in höherem Umfang kompressibel ist. Z.B. kann die Reibmaterialhärte von innen nach außen abnehmen. Wodurch der Anpreßdruck und damit die übertragenen Reibleistung beeinflußt werden kann.

Eine weitere Möglichkeit zur Beeinflussung des Anpreßdruckes und damit der übertragenen Reibleistung besteht darin, daß die Belagträgerplatte oder der Reibbelag in Radialrichtung eine nach außen abnehmende Dicke aufweisen.
Im folgenden werden unter Bezugnahme auf die Zeichnungen Ausführungsbeispiele der Erfindung näher erläutert.

Es zeigen:
- Fig. 1: eine Draufsicht auf eine Bremsbacke und eine Bremsscheibe einer Teilbelagscheibenbremse,
- Fig. 2: ein erstes Ausführungsbeispiel einer Bremsbacke,
- Fig. 3: ein zweites Ausführungsbeispiel einer Bremsbakke, und
- Fig. 4: ein drittes Ausführungsbeispiel einer Bremsbake.

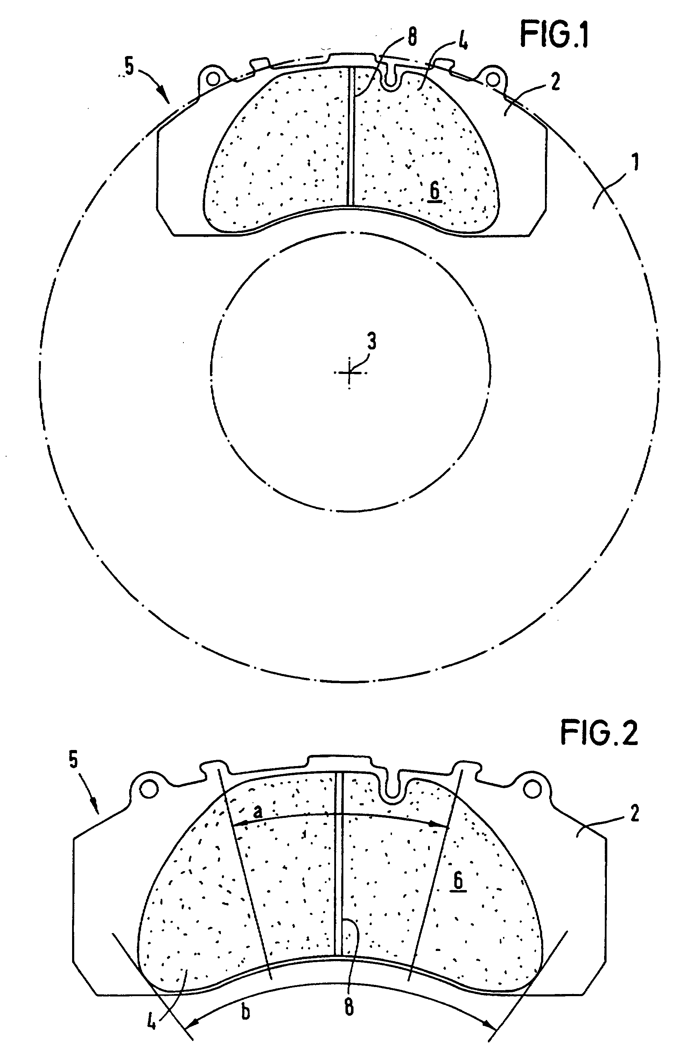

Bei einer Teilbelagscheibenbremse gemäß Fig. 1 ist als rotierender Teil einer Bremsscheibe 1 vorgesehen, die von zwei stationär gegenüberliegend angeordneten Bremsbacken 5 abgebremst werden kann. Die Bremsbacken 5 werden von einer für sich bekannten pneumatischen Bremsanlage gegen die Bremsscheibe 1 angepreßt. Jede Bremsbacke 5 besteht aus einem aus Reibmaterial gebildeten Reibbelag 4 und einer Belagträgerplatte 2, auf der der Reibbelag 4 befestigt ist.

Fig. 1 zeigt eine Belagträgerplatte 2 und ist einer üblichen Teilbelagscheibenbremse für Lastkraftwagen.

Wie aus Fig. 2 ersichtlich, ist die Reibbelaggeometrie des Reibbelages 4 derart verändert, daß die Reibbelagfläche 6 in Radialrichtung zunehmend verringert wird. Der Reibbelag 4 ist in seiner radialen Symmetrielinie durch einen Schlitz 8 unterteilt.

Die Reibbelagfläche 6 besteht aus einem kreissegmentförmigen Abschnitt a und sich beiderseits davon anschließenden Abschnitten, deren Fläche in Radialrichtung nach außen abnehmend ist. Das Verhältnis der Kreisbogenabschnitte a zu b ist ca. 1:2 bis 1:3.

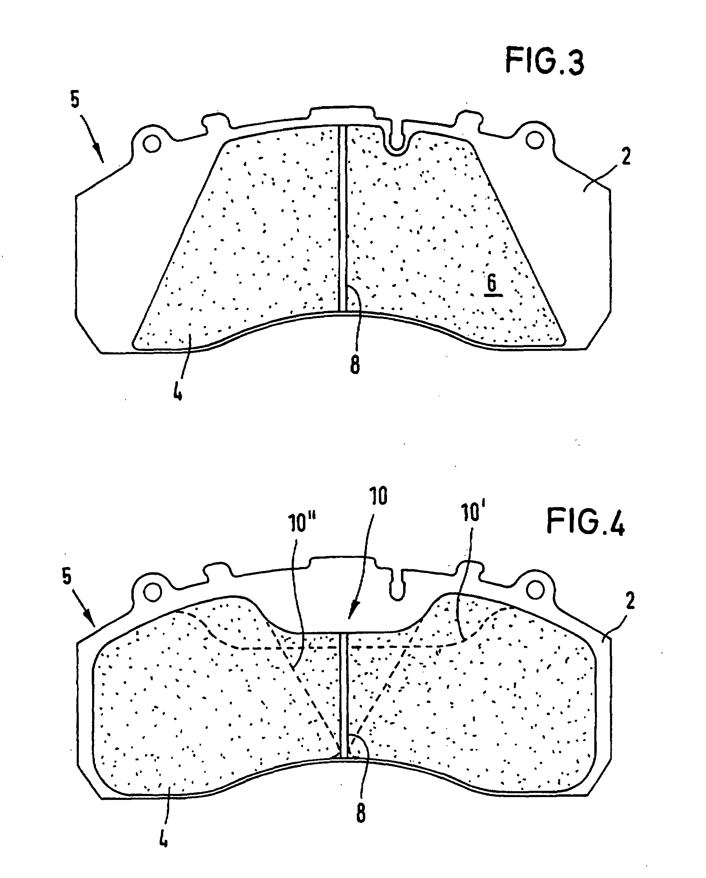

Fig. 3 zeigt ein zweites Ausführungsbeispiel des Reibbelages 4 mit einer im wesentlichen trapezförmigen Reibbelagfläche 6, bei der ebenfalls die tangentiale Länge des Reibbelages in Radialrichtung nach außen kontinuierlich abnimmt.

Fig. 4 zeigt schließlich ein drittes Ausführungsbeispiel eines Reibbelages 4 mit im wesentlichen konventioneller Grundform, bei dem allerdings die Reibbelagfläche eine Aussparung 10,10',10'' aufweist, derart, daß die Reibbelagfläche zumindest im radialen Außenbereich verringert ist oder in Radialrichtung nach außen kontinuierlich abnimmt.

Die Reibbelaggeometrie der Reibbelagfläche 6 gemäß Ausführungsbeispiel der Fig. 2 hat in Bremsversuchen die besten Ergebnisse ergeben, wobei 500 Dauerbremsungen ohne durchgängige Risse ermöglicht wurden. Wärmebildaufnahmen der Bremsscheibe 1 zeigen, daß die Erwärmung durch die veränderte Geometrie der Reibbelagfläche vergleichmäßigt werden kann, wodurch Ausdehnungsunterschiede der Bremsscheibe 1 minimiert werden. Desweiteren kann den Wärmebildaufnahmen festgestellt werden, daß die Temperaturspitzenbelastung des Außenbereichs der Bremsscheibe erheblich reduziert werden kann.

Die Ausbildung von in Radialrichtung unterschiedlich erhitzten Wärmezonen der Bremsscheibe kann durch die Einbringung von radial unterschiedlichen Reibleistungen ausgeglichen oder zumindest vergleichmäßigt werden. Die Gefahr von Rißbildungen ist dadurch erheblich verringert, wobei insbesondere radial durchgehende Risse vermieden werden.

Alternativ oder zusätzlich zur Beeinflussung der Reibleistung durch die veränderte Reibbelagflächengeometrie kann die Reibleistung durch die in Radialrichtung veränderte Zusammensetzung des Reibmaterials, durch die in Radialrichtung unterschiedliche Verdichtung des Reibmaterials oder durch eine in Radialrichtung des Reibbelages 4 abnehmende Anpreßkraft beeinflußt werden. Beispielsweise ist es möglich, in bestimmten Bereichen der Reibbelagfläche 6 zur Erhöhung der Reibleistung reibwerterhöhende Reibmaterialkomponenten der Mischung beizufügen.

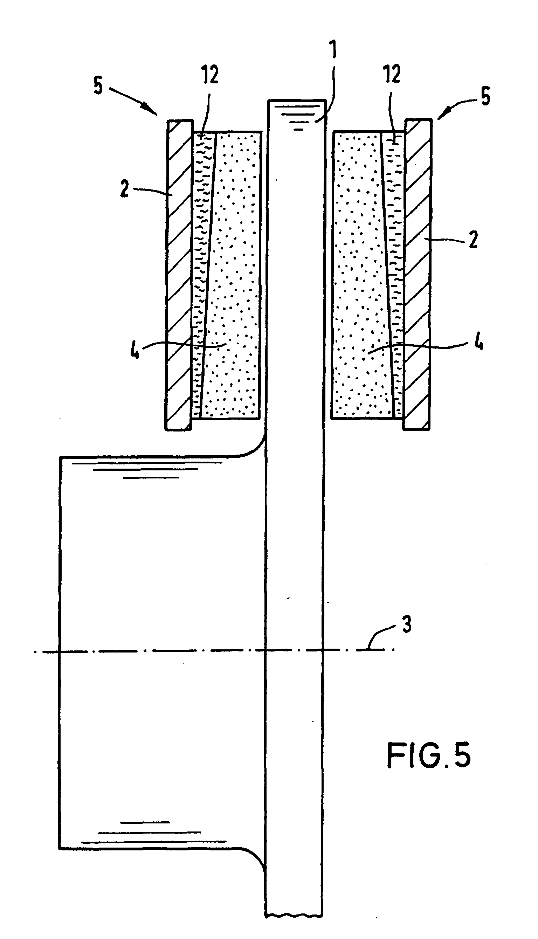

Fig. 5 zeigt ein Ausführungsbeispiel einer Teilbelagscheibenbremse bzw. einer Bremsbacke 5, bei der zwischen Reibbelag 4 und Belagträgerplatte 2 eine radial nach außen keilförmig in der Dicke zu nehmende Zwischenschicht 12 angeordnet ist, die im Vergleich zum Reibbelag 4 erheblich kompressibler ist, z.B. um den Faktor 2. Die erhöhte Kompressibilität hat zur Folge, daß der Anpreßdruck der Bremsbacke 5 in Radialrichtung nach außen kontinuierlich abnimmt, wodurch im Außenbereich der Bremsscheibe 1 eine verringerte Reibleistung eingebracht werden kann.

## Patentansprüche

1. Teilbelagscheibenbremse, insbesondere für Lastkraftwagen, mit einer um eine im wesentlichen horizontale Achse (3) rotierenden Bremsscheibe (1) und mit beidseitig der Bremsscheibe (1) angeordneten, während des Bremsvorgangs angepreßten Bremsbacken (5), bestehend aus einer Belagträgerplatte (2) und einem auf der Belagträgerplatte (2) befestigten Reibbelag (4),
**dadurch gekennzeichnet,**
**daß** zum Ausgleich der radial unterschiedlichen Wärmeverteilung in der Bremsscheibe (1) zwischen Reibbelag (4) und Belagträgerplatte (2) eine keilförmige Zwischenschicht (12) angeordnet ist, die in Radialrichtung nach außen in der Dicke zunimmt und deren Kompressibilität höher ist als die des Reibbelages (4), wodurch eine der Wärmeverteilung entgegengesetzte radiale Profilierung der über den Bremsbelag (4) eingebrachten Reibleistung erfolgt.

2. Bremsbacke (5) für Teilbelagscheibenbremsen mit einer Bremsscheibe (1), insbesondere für Lastkraftwagen, mit einer Belagträgerplatte (2) und einem auf der Belagträgerplatte (2) befestigten Reibbelag (4),
**dadurch gekennzeichnet,**
**daß** zum Ausgleich der radial unterschiedlichen Wärmeverteilung in der Bremsscheibe (1) zwischen Reibbelag (4) und Belagträgerplatte (2) eine keilförmige Zwischenschicht (12) angeordnet ist, die in Radialrichtung nach außen in der Dicke zunimmt und deren Kompressibilität höher ist als die des Reibbelages (4), wodurch eine der Wärmeverteilung entgegengesetzte radiale Profilierung der über den Bremsbelag (4) eingebrachten Reibleistung erfolgt.

3. Vorrichtung nach einem der Ansprüche 1 oder 2, **dadurch gekennzeichnet, daß** die radiale Profilierung der über den Reibbelag eingebrachten Reibleistung durch eine radial unterschiedliche Zusammensetzung des Reibbelagmaterials und/oder durch in Radialrichtung unterschiedliche physikalische Eigenschaften der Reibbelagmischung erfolgt.

4. Vorrichtung nach einem der Ansprüche 1 bis 3, **dadurch gekennzeichnet, daß** die tangentiale Länge des Reibbelages (4) in Radialrichtung nach außen kontinuierlich abnimmt.

5. Vorrichtung nach einem der Ansprüche 1 bis 3, **dadurch gekennzeichnet, daß** der Reibbelag (4) in dem radial äußeren Bereich eine Aussparung (10) aufweist.

6. Vorrichtung nach einem der Ansprüche 1 bis 4, **dadurch gekennzeichnet, daß** der Reibbelag (4) eine im wesentlichen trapezartige Form aufweist, deren breitere Basisseite radial innen angeordnet ist.

7. Vorrichtung nach einem der Ansprüche 3 bis 6, **dadurch gekennzeichnet, daß** die Zusammensetzung des Reibbelagmaterials in Radialrichtung einen unterschiedlichen Reibwert aufweist.

8. Vorrichtung nach einem der Ansprüche 3 bis 7, **dadurch gekennzeichnet, daß** das Reibbelagmaterial in Radialrichtung eine unterschiedliche Kompressibilität aufweist.

9. Vorrichtung nach einem der Ansprüche 1 bis 8, **dadurch gekennzeichnet, daß** der Reibbelag (4) im Verhältnis zur Zwischenschicht (12) entgegengesetzt keilförmig gestaltet ist, so daß die Reibbelagfläche (6) parallel zur Belagträgerplatte (2) verläuft.

10. Vorrichtung nach einem der Ansprüche 1 bis 9, **dadurch gekennzeichnet, daß** die Belagträgerplatte (2) oder der Reibbelag (4) in Radialrichtung eine nach außen abnehmende Dicke aufweisen.

## Claims

1. A disc brake with partial linings in particular for trucks having a brake disc (1) rotating around a substantially horizontal axis (3) and comprising brake jaws (5) arranged on either side of the brake disc (1), the brake jaws being pressed against the disc during braking and comprising a lining support plate (2) and a brake lining (4) fastened to the lining support plate (2), wherein for compensation of the radially different heat distribution in the brake disc (1), a wedge-shaped intermediate layer (12) is arranged between the brake lining (4) and the lining support plate (2), the thickness thereof increasing radially outward and the compressibility thereof being greater than that of the brake lining (4), whereby a radial profiling of the frictional power, which is opposite to the heat distribution, induced via the brake lining (4) is realized.

2. A brake jaw (5) for brake discs with partial linings, comprising a brake disc (1), in particular for trucks, comprising a lining support plate (2) and a brake lining (4) fastened to the lining support plate (2), wherein for compensation of the radially different heat distribution in the brake disc (1), a wedge-shaped intermediate layer (12) is arranged between the brake lining (4) and the lining support plate (2), the thickness thereof increasing radially outward and the compressibility thereof being greater than that of the brake lining (4), whereby a radial profiling ofthe frictional power, which is opposite to the heat distribution, induced via the brake lining (4) is realized.

3. The device of one of claims 1 or 2, wherein the radial profiling of the frictional power induced via the brake lining is realized by a radially different composition of the brake lining material and/or by radially different physical properties of the brake lining mixture.

4. The device of one of claims 1 to 3, wherein the tangential length of the brake lining (4) continuously decreases radially outward.

5. The device of one of claims 1 to 3, wherein the brake lining (4) has a recess (10) in the radially outer portion thereof.

6. The device of one of claims 1 to 4, wherein the brake lining (4) is substantially trapezoidal in shape, the wider base thereof being located on the radially inner side.

7. The device of one of claims 3 to 6, wherein the composition of the brake lining material has different frictional values in the radial direction.

8. The device of one of claims 3 to 7, wherein the brake lining material has a different compressibility in the radial direction.

9. The device of one of claims 1 to 8, wherein the brake lining (4) is of a wedge-shape opposite to that ofthe intermediate layer (12) so that the brake lining surface (6) extends in parallel to the lining support plate (2).

10. The device of one of claims 1 to 9, wherein the lining support plate (2) or the frictional lining (4) have a thickness decreasing radially outward.

## Revendications

1. Frein à disque à garniture partielle, en particulier pour véhicules utilitaires, comportant un disque de frein (1) tournant autour d'un axe (3) essentiellement horizontal, et des plaquettes de frein (5) disposées de part et d'autre du disque de frein (1), pressées contre le dique pendant le processus de freinage, se composant d'une plaque support de garniture (2) et d'une garniture de friction (4) fixée à la plaque support de garniture (2), **caractérisé par le fait que**,
pour équilibrer la distribution thermique différente radialement dans le disque de frein (1), une couche intermédiaire (12) en forme de coin est disposée entre la garniture de friction (4) et la plaque support de garniture (2), l'épaisseur de la couche augmentant dans le sens radial vers l'extérieur, et la compressibilité de cette couche étant plus élevée que celle de la garniture de friction (4), grâce à quoi se produit un profil radial de la puissance de friction, engendrée par la garniture de friction (4), opposé à la distribution thermique.

2. Plaquette de frein (5) pour frein à disque à garniture partielle comportant un disque de frein (1), en particulier pour véhicules utilitaires, comprenant une plaque support de garniture (2) et une garniture de friction (4) fixée à la plaque support de garniture (2), **caractérisée par le fait que**,
pour équilibrer la distribution thermique différente radialement dans le frein à disque (1), une couche intermédiaire (12) en forme de coin est disposée entre la garniture de friction (4) et la plaque support de garniture (2), l'épaisseur de la couche augmentant dans le sens radial vers l'extérieur et la compressibilité de cette couche étant plus élevée que celle de la garniture de friction (4), grâce à quoi se produit un profil radial de la puissance de friction, engendrée par la garniture de friction (4), opposé à la distribution thermique.

3. Dispositif selon la revendication 1 ou 2, **caractérisé par le fait que** le profil radial de la puissance de friction engendrée par la garniture de friction résulte d'une composition différente radialement de la matière de la garniture de friction et/ou de propriétés physiques différentes dans le sens radial du mélange de garniture de friction.

4. Dispositif selon l'une des revendications 1 à 3, **caractérisé par le fait que** la longueur tangentielle de la garniture de friction (4) diminue de manière continue dans le sens radial vers l'extérieur.

5. Dispositif selon l'une des revendications 1 à 3, **caractérisé par le fait que** la garniture de friction (4) comporte un évidement (10) dans la zone extérieure radialement .

6. Dispositif selon l'une des revendications 1 à 4, **caractérisé par le fait que** la garniture de friction (4) présente une forme essentiellement trapézoïdale, dont la grande base est disposée radialement vers l'intérieur.

7. Dispositif selon l'une des revendications 3 à 6, **caractérisé par le fait que** la composition de la matière de la couche de friction présente un coefficient de friction qui diffère dans le sens radial.

8. Dispositif selon l'une des revendications 3 à 7, **caractérisé par le fait que** la matière de la garniture de friction présente une compressibilité qui diffère dans le sens radial.

9. Dispositif selon l'une des revendications 1 à 8, **caractérisé par le fait que** la garniture de friction (4) est façonnée en forme de coin, de manière opposée à la couche intermédiaire (12), de sorte que la face de la garniture de friction (6) s'étend parallèlement à la plaque support de garniture (2).

10. Dispositif selon l'une des revendications 1 à 9, **caractérisé par le fait que** la plaque support de garniture (2) ou la garniture de friction (4) présente une épaisseur diminuant dans le sens radial vers l'extérieur.
